# EUROPEAN PATENT SPECIFICATION

(11) **EP 1 136 000 B1**
(45) Date of publication and mention of the grant of the patent: **17.04.2013**
(21) Application number: 00303543.3
(22) Date of filing: 27.04.2000
(51) Int. Cl.: A23L 3/40, A23B 7/02, F26B 5/02, F26B 11/02, F26B 3/04, A23B 7/03, A23L 3/48, A23L 3/50

(54) **2-Step method for drying mash-products**
Zwei-Schritte-Verfahren zum Trocknen von Maischen
Procédé à deux étapes de sèchage de produits en purée

(30) Priority: 21.03.2000 KR 1421800
(43) Date of publication of application: 26.09.2001
(73) Proprietor: Eiyoh Co., Ltd., Iwaki-City, Fukushima-Pre (JP)
(72) Inventor: Suzuki, Takanobu, Iwaki-City, Fukushima-Pre (JP)
(74) Representative: Neobard, William John

(56) References cited:
- WO-A-95/14201
- US-A- 126 455
- US-A- 2 323 289
- US-A- 3 785 063
- US-A- 4 177 575
- US-A- 4 334 366
- US-A- 4 499 847
- US-A- 4 799 449
- US-A- 5 088 210
- DATABASE WPI Section PQ, Week 199736 Derwent Publications Ltd., London, GB; Class Q76, AN 1997-386031 XP002252290 -& CN 1 110 782 A (EIYO KK), 25 October 1995 (1995-10-25)
- PATENT ABSTRACTS OF JAPAN vol. 009, no. 119 (C-282), 23 May 1985 (1985-05-23) -& JP 60 009479 A (AWAJI WAKAME KK), 18 January 1985 (1985-01-18)

## Description

The present invention relates to a 2-step method for drying mash-products using a first drying unit (a flow rotary drying unit) and a second drying unit (a mixing rotary drying unit), the first drying unit and the second drying unit being arranged in a series.

Generally, there are used fish cakes or dried mash-products in the shape of a circular plate, a semicircular plate, a swirl, a rice cake with a orange pattern imprinted, a designed crab, a panda and other animals as a kind of seasoning ingredients of instant noodles, such as curled noodles and noodles in a bowl the term of "mash-product" in this specification and claims means a product made from wheat flour dough and the like.

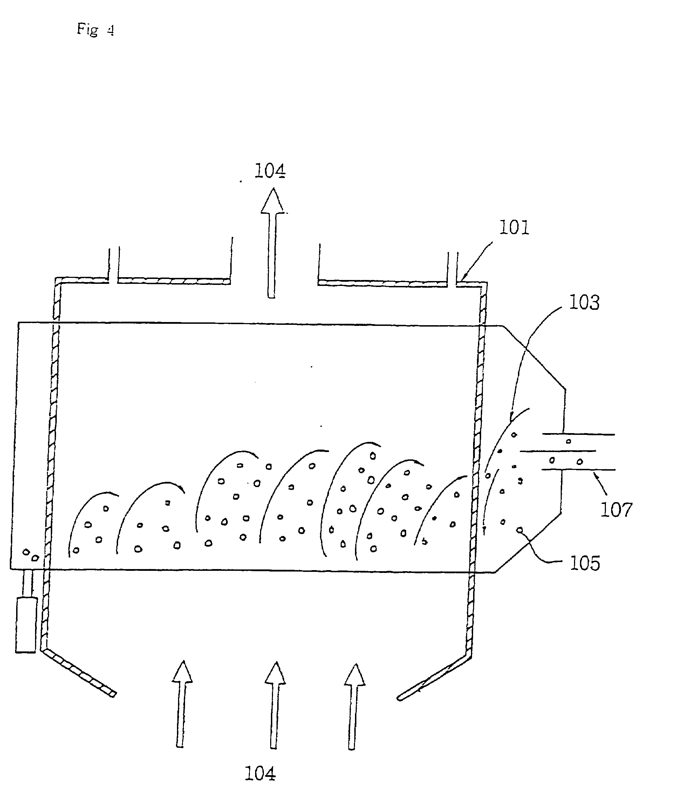

Fig. 4 is a schematic side cross-sectional view of a flow rotary drying device disclosed from Korean Patent No. 130127, which was published on April 17, 1998 under Korean Patent Publication No. 130127/1998. The aforesaid patent discloses a method and device for drying mash-products consecutively characterized in that cut mash-products 105 are sorted by a mesh-type vibrating input feeder, then moved through into an input opening 107 by means of an input fan, dropped into an inlet of a drying can 101 by means of a screening plate 103, and then flowed and transferred to an output opening.

According to the aforesaid patent, however, if the speed of a hot wind 104 become increased in the vicinity of the inlet in order to make the mash-products be floated and flowed in the rotary drum, the mash-products are flown away to the output opening earlier than the predetermined time, resulting in poor mash-products which does not contain predetermined moisture therein.

In addition, if the mash-products are provided with reducing starchy resolution substance(for example, D-sorbitol, millet jelly, etc.) amount of which are more than in the prior art so as to prevent split of the mash-products, they adhere to one another during the drying operation. In order to prevent this phenomenon, the mash-products must be floated and flowed heavily until they no longer contain moisture with which the mash-products adhere to one another. As the speed of the hot wind 104 increases in order to float and flow the mash-products heavily, the aforementioned phenomenon occurs more significantly, resulting in more poor mash-products.

US 4334366 discloses a sonic energy perforated drum for rotary driers. The perforated drum serves as a drying chamber into which moist particles are loaded. The drum is rotated about a horizontal axis to tumble the particles. Sonic energy and hot pulsating gas from a pulse jet engine are supplied to a plenum opening into the drum. The drying may also be performed in stages by coupling together two or more rotary dryers and operating each at progressively lower temperatures.

Therefore, the present invention is aimed to solve the aforementioned problems.

According to a first aspect of the present invention, there is provided a 2-step method for drying mash-products according to claim 1.

The preferred embodiment of the present invention will be described in detail with reference to the accompanying drawings. In the drawings:
Fig. 1 is a schematic view showing a 2-step device for drying mash-products ;
Fig. 2 is a. schematic side cross-sectional view showing a second drying unit of the 2-step device for drying mash-products along a line X-X of Fig. 1;
Fig. 3 is a front view showing a second drying unit of the 2-step device for drying mash-products along a plane Y-Y of Fig. 1; and
Fig. 4 is a schematic side cross-sectional view of a flow rotary device for drying mash-products according to the prior art.

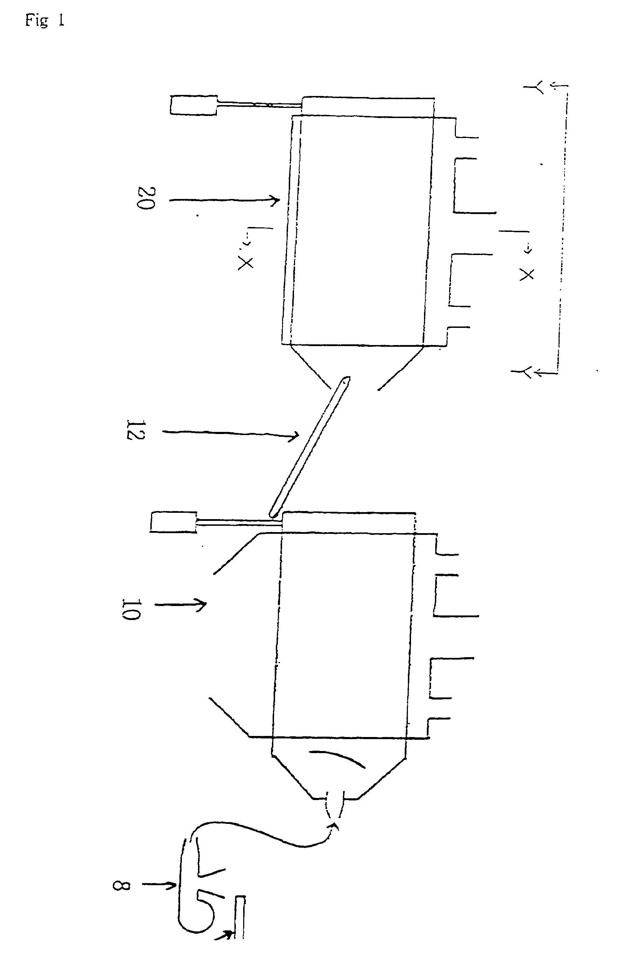

Fig. 1 is a schematic view showing a 2-step device for drying mash-products according to the method of the present invention. Frozen mash-products 2A are cut to a predetermined thickness, for example 1.0 mm to 3.0 mm, by means of a cutting device 4. The cut mash-products 2A are transferred into a vibrating feeder 6 in the shape of nets, by which the mash-products are sorted and the poor mash-products are removed. The sorted good mash-products 2A are thrown into a first drying unit 10 by an air blast by means of an input fan 8. The mash-products 2B, which are dried in the first drying unit 10, are transferred into a second drying unit 20 by means of a input conveyor 12. The second drying operation is carried out in the second drying unit 20.

The first drying unit is a flow rotary drying unit in which a large quantity of the hot wind is supplied into the even rotary drum so as to float and flow the mash-products heavily, and mix the hot wind and the mash-products, resulting in uniform drying. The drum is rotated in order to prevent the mash-products from accumulating at a place where the hot wind is weak. The first drying unit is identical or similar to the drying device of the aforesaid patent shown in Fig. 4, thus the detailed description of the construction thereof will be omitted.

During the first drying operation, the mash-products, which are cut to a thickness of 1 mm to 3 mm, are input at the rate of 3 to 6 kg/min, and the drum is rotated at 4 to 5 rpm. The mash-products are dried continuously for 10 minutes to 20 minutes while the hot wind having the temperature of 50 to 70°C is supplied to the inlet at the speed of 6 to 8 m/sec and to the outlet at the speed of 4 to 6 m/sec. As compared to the aforesaid patent, it is seen that as the flow rate of the hot wind is increased, the speed of the hot wind is increased, the speed of the hot wind which passes the surface of the mash-products is increased, the pressure on the mash-products is decreased, the drying time of the surfaces of the mash-products is decreased to prevent them from adhering to one another even though the temperature of the hot wind becomes low.

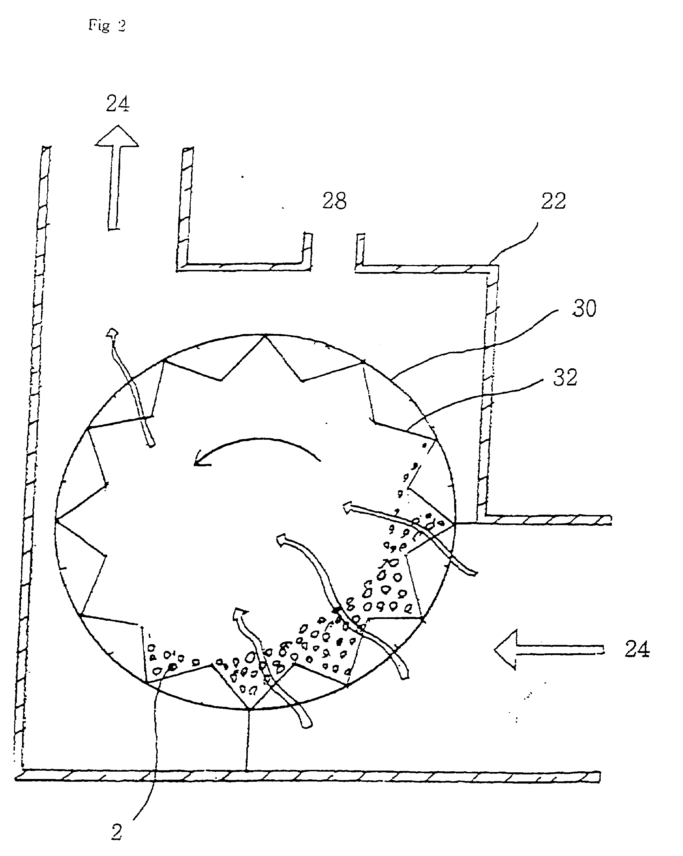

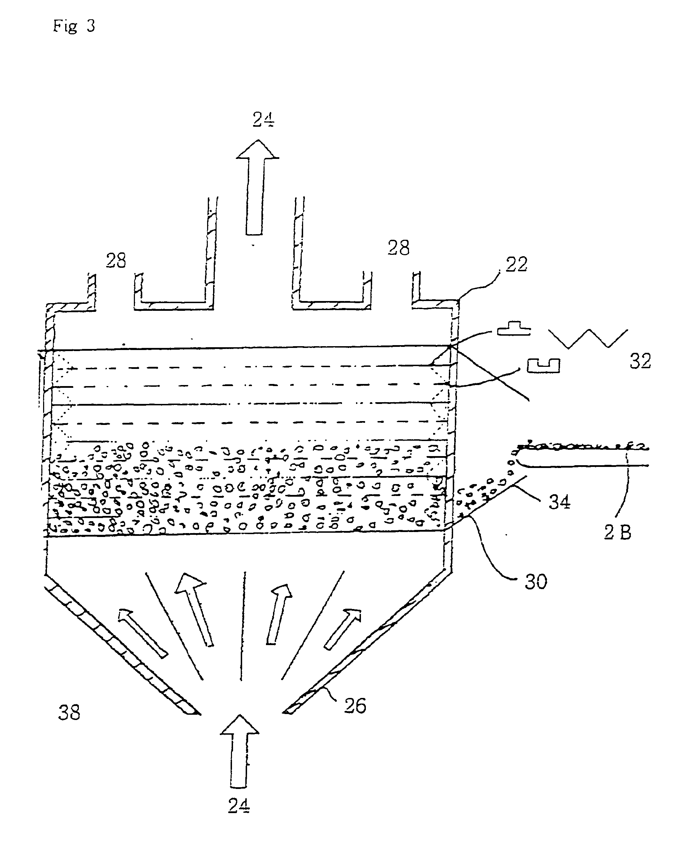

Fig. 2 is a schematic side cross-sectional view showing a second drying unit 20 of the 2-step device for drying mash-products according to the method of the present invention along a line X-X of Fig. 1, and Fig. 3 is a front cross-sectional view showing a second drying unit of Fig. 2 along a plane Y-Y of Fig. 1. The second drying unit 20 is a mixing rotary drying unit. The hot wind is supplied into the rotary drum with the uneven surface such that the mash-products are floated or flowed. As the drum is rotated, the mash-products in the depressed portions are lifted to the upper portion of the drum and then dropped so that the mash-products are mixed with the hot wind, thereby the drying operation is carried out. At this time, if the rotating speed of the drum is increased, the number of mixture between the mash-products and the hot wind is increased, thereby it is possible to dry the mash-products uniformly.

Referring to Fig. 2 and Fig. 3, a drying can 22 of the second drying unit 20 is provided at the lower side portion thereof with a input opening 26 through which the hot wind 24 is input, and is provided at the upper portion thereof with a output opening 28 through which the wasted hot wind is discharged. The drum 30 is provided at the part thereof located inside the drying can 22 with holes and a plurality of depressed portions 32 made of teflon-coated metal and formed in the shape of mountains (i.e. corrugated). The drum is provided at one end thereof with an input opening 34, and is provided at the other end thereof with an output opening 36. Two or more dampers are provided for adjusting the flow rate of the hot wind 24, and a plunger 38 is provided for adjusting the angle of inclination of the drum 30.

During the second drying operation, the input conveyor 12, the blowing fan, the discharging fan, and the drum are rotated. The hot wind which is heated to the temperature of 70 to 120 °C, preferably 100 °C by means of a burner, is supplied to the input opening 34 and the output opening 36 at the wind speed of 1 to 3 m/sec, preferably 2 m/sec. The drum 30 is rotated at 6 to 8 rpm, preferably 12 rpm. The input conveyor 12 is operated while the drum 30 is maintained horizontally. The mash-products 2B, which are dried with 25 to 35% of content of the moisture by the first dry operation, are output at the rate of 2 to 4 kg/min, and subsequently transferred into the second drying can 22. After 20 to 40 minutes, preferably 25 minutes from the beginning of the inputting operation, the dried mash-products 2C are drawn out by proper opening of the opening and closing unit of the output opening.

At this time, the dried mash-products may be accumulated in the depressed portions for some time in the mixing rotary drying unit (the second drying unit), all of the mash-products are not subjected to the hot wind uniformly. For this reason, the mash-products may be bent if they are not dried evenly. Accordingly, in order to dry the mash-products evenly, the mash-products must be dried until they contain the content of the moisture (25 to 35%) with which they may not be bent to what extent in the flow rotary drying unit (the first drying unit), and then the mash-products must be adjusted finely until they contain the desired moisture in the mixing rotary drying unit (the second drying unit). Even if the content of the moisture in the mash-products input into the mixing rotary drying unit is not uniform, since the amount of the supplied hot wind is less, the mash-products containing more moisture can take the heat capacity necessary for vaporizing the moisture to be dried relatively fast, and ones containing less moisture do not take the heat capacity necessary for vaporizing the moisture to be dried relatively slow (referring to drying device, TOUEI RYOZO, nikkan kogyo shinbunsha, February 10, 1980, pages 12-13). As a result, the mash-products are dried uniformly at the output opening.

The fine adjusting in the second drying operation will now be described. The temperature of the hot wind or the angle of inclination of the drum 30 is adjusted, thereby it is possible to carry out the adjusting operation more finely and easily than the prior art. In addition, the angle of inclination of the drum 30 is adjusted to the maximum after the drying operation, and at the same time the opening-closing unit of the output opening is fully opened, thereby it is possible to draw out the mash-products more rapidly and easily than the prior art.

According to the present invention, the 2-step method for drying the mash-products comprises the steps of: carrying out a first drying operation of the mash-products 2A; and carrying out a second drying operation of the mash-products 2B which has been dried by the first drying operation.

The second drying operation comprises the steps of: rotating the drum 30; blowing the hot wind into the drum 30; throwing the first dried mash-products 2B into the input opening 34 by means of the input conveyor 12; dropping the input mash-products 2B into the inlet so that they are dried secondly in the rotating drum 30; and discharging the second dried mash-products 2C through the discharging opening 36, wherein the hot wind used for drying is circulated during the second drying operation, and at the same time the used hot wind is discharged.

### EXAMPLE

According to one preferred embodiment of the present invention, reducing starchy resolution substance (for example, D-sorbitol, millet jelly, etc.) amount of which are as two times as that of the aforesaid patent were added, the frozen mash-products 2A formed by a prescribed process were cut by 1.0 mm in thickness, and then transferred into the first drying unit via the input fan 8, at the rate of 6 kg/min. In the first drying unit 10, the hot wind 24 having the temperature of 70 °C was supplied to the input opening 34 at the speed of 7.5 m/sec and to the output opening 36 at the speed of 5.5 m/sec. The rotating speed of the drum 30 was 4 rpm. The blown mash-products 2A were floated and flowed, and then were moved to the output opening slowly. As the mash-products were moved to the output, the rate of float and flow were lowered. Under this condition, the drum 30 was inclined while the output opening 36 was opened so that the mash-products 2B was discharged by 4 kg/min after 15 minutes. The content of the moisture of the continuously discharged mash-products 2B was 25.7%.

Subsequently, the mash-products were transferred into the second drying unit 20, in which the temperature of the hot wind was set to 110 °C, and the speed of the hot wind was set to approximately 1.0 m/sec both for the input opening and the output opening. And then, the mash-products were blown into the uneven drum 30 rotating at 9 rpm by means of the input conveyor 12. The blown semi-dried mash-products 2B were mixed with the hot wind 24, and transferred to the output opening 36 slowly.

Under this condition, the drum 30 was inclined while the output opening 36 was opened so that the mash-products 2B was discharged by 3.3 kg/min after 20 minutes. The content of the moisture of the continuously discharged mash-products 2B was 11.5%.

According to the method for drying the mash-products of the invention, the mash-products are input continuously during the first drying operation, floated and flowed heavily, dried with the condition that they are flat and they have the moisture with which any bending or adhesion are not caused, and output successively. Afterwards, the mash-products are transferred to the second drying operation. In the second drying operation, since the inner surface area of the drum is large, the drum are rotated very fast, the mash-products are mixed satisfactorily with the hot wind. Further, since the hot wind of low speed is supplied, the mash-products are not flown away toward the output opening, and thus it is possible to adjust. the content of the moisture of the mash-products more finely and easily than the prior art. Consequently, it is possible to maintain the mash-products under the optimal dried condition without any skill of operators. In addition, during the second drying operation, since the used hot wind is circulated and then reused, it is possible to save on energy. Also, since the angle of inclination of the plunger can be adjusted after the drying operation, the dried mash-products can be discharged more easily.

## Claims

1. A 2-step method for drying mash-products, comprising the steps of:
carrying out a first drying operation of the mash-products (2A) in a first drying unit (10) ; and
carrying out a second drying operation of the mash-products (2B) which have been dried by the first drying operation in a second drying unit (20),
wherein the first drying unit is a flow rotary drying unit comprising an even drum and an input opening for supplying hot wind whereby the mash products (2A) are floated and mixed in the hot wind,
wherein the second drying unit is a mixing rotary drying unit comprising an uneven drum and an input opening for supplying hot wind, the uneven drum having a plurality of depressed portions whereby the mash products (2B) in the depressed portions are lifted to an upper portion of the uneven drum and then dropped to mix the mash products (2B) in the hot wind, wherein said first drying operation comprises the steps of: blowing the mash-products (2A) into the first drying unit; rotating the even drum; blowing hot wind into the even drum; and discharging first dried mash-products (2B),
and wherein said second drying operation comprises the steps of: rotating the uneven drum (30); blowing the hot wind into the uneven drum (30); throwing the first dried mash-products (2B) into an input opening (34) of the second drying unit by means of an input conveyor (12); dropping the input mash-products (2B) into an inlet so that they are dried secondly in the rotating uneven drum (30); and discharging second dried mash-products (2C) through a discharging opening (36),
said hot wind used for drying being circulated during the second drying operation, and at the same time said used hot wind being discharged,
wherein the hot wind in the second drying unit has a lower speed than the hot wind in the first drying unit.

2. The method according to claim 1, wherein three dampers are arranged respectively at the input opening (34), a middle portion of the second drying unit, and the discharging opening (36) so that the flow rate of the hot wind is adjusted equally at said three positions when the hot wind (24) is blown during the second drying operation.

3. The method of claim 1 or 2, wherein said even drum is rotated at 3 to 6 rpm during the first drying operation, and said uneven drum (30) is rotated at 6 to 18 rpm during the second drying operation.

4. The method of any of claims 1-3, wherein the blowing temperature of the hot wind is 50 to 70 °C during the first drying operation, and the blowing temperature of the hot wind (24) is 70 to 120 °C during the second drying operation.

5. The method of any of claims 1-4, wherein the blowing speed of the hot wind is 6 to 8 m/sec at the inlet of the first drying unit and 4 to 6 m/sec at the outlet of the first drying unit during the first drying operation, and the blowing speed of the hot wind is 1 to 3 m/sec during the second drying operation.

6. The method of any of claims 1-5, wherein the drying time of the first drying operation is 10 to 20 minutes, and the drying time of the second drying operation is 20 to 40 minutes.

7. The method of any of claims 1-6, wherein the content of the moisture of the mash-products (2A) which are blown into the first drying unit during the first drying operation is 45 to 60%, and the content of the moisture of the mash-products (2B) which are blown into the second drying unit during the second drying operation is 25 to 35%.

8. The method of any of claims 1-7, further comprising an opening and closing unit of the discharging opening of the second drying unit for adjusting the amounts of the discharged mash-products as means for adjusting the content of the moisture before discharging the dried mash-products (2C) through the discharging opening (36).

9. The method of any of claims 1-8, wherein a fine adjusting of moisture content of the dried mash-product (2C) is carried out by controlling temperature of the hot wind (24) in the second drying operation.

10. The method of any of claims 1-9, wherein a fine adjusting of moisture content of the dried mash-product (2C) is carried out by controlling an angle of inclination of the uneven drum (30) by means of a plunger (38).

## Patentansprüche

1. Zwei-Schritte-Verfahren zum Trocknen von Püreeprodukten, das folgende Schritte umfasst:
Durchführen eines ersten Trockenvorgangs der Püreeprodukte (2A) in einem ersten Trockner (10); und
Durchführen eines zweiten Trockenvorgangs der Püreeprodukte (2B), die durch den ersten Trockenvorgang getrocknet worden sind, in einem zweiten Trockner 20),
wobei der erste Trockner ein Durchflusstrommeltrockner ist, der eine ebene Trommel und eine Eingangsöffnung zur Versorgung von Heißwind umfasst, wodurch die Püreeprodukte (2A) im Heißwind geschwebt und gemischt werden,
wobei der zweite Trockner ein Mischtrommeltrockner ist, der eine unebene Trommel, und eine Eingangsöffnung zur Versorgung von Heißwind umfasst, wobei die unebene Trommel eine Vielheit von tief liegenden Teilen aufweist, wodurch die Püreeprodukte (2B) in den tief liegenden Teilen zu einem oberen Teil der unebenen Trommel gehoben und dann fallen gelassen werden, um die Püreeprodukte (2B) im Heißwind zu mischen, wobei der besagte erste Trockenvorgang folgende Schritte umfasst: Blasen der Püreeprodukte (2A) in den ersten Trockner; Rotieren der ebenen Trommel; Blasen von Heißwind in die Trommel; und Ausspeisen zuerst getrockneter Püreeprodukte (2B),
und, wobei der besagte zweite Trockenvorgang die folgenden Schritte umfasst: Rotieren der unebenen Trommel, (30); Blasen des Heißwinds in die unebene Trommel (30); Werfen der zuerst getrockneten Püreeprodukte (2B) in eine Eingangsöffnung (34) des zweiten Trockners mittels eines Einspeise-Förderbands (12); Fallenlassen der Einspeise-Püreeprodukte (2B) in einen Einlass, sodass sie zweitens in der rotierenden unebenen Trommel (30) getrocknet werden; und Ausspeisen zweitens getrockneter Püreeprodukte (2C) durch eine Ausspeiseöffnung (36),
wobei besagter Heißwind, der für das Trocknen verwendet wird, während des zweiten Trockenvorgangs zirkuliert wird, und gleichzeitig der besagte verwendete Heißwind ausgespeist wird,
wobei der Heißwind im zweiten Trockner eine geringere Geschwindigkeit als der Heißwind im ersten Trockner hat.

2. Verfahren nach Anspruch 1, wobei drei Dämpfer jeweils an der Einspeiseöffnung (34), einem mittigen Teil des zweiten Trockners und der Ausspeiseöffnung (36) angeordnet sind, die Durchflussmenge des Heißwinds an den besagten drei Positionen gleichmäßig eingestellt ist, wenn der Heißwind (24) während des zweiten Trockenvorgangs geblasen wird.

3. Verfahren nach Anspruch 1 oder 2, wobei die besagte ebene Trommel, während des ersten Trockenvorgangs, mit 3 bis 6 U/min rotiert wird und die besagte unebene Trommel, während des zweiten Trockenvorgangs (30), mit 6 bis 18 U/min rotiert wird.

4. Verfahren nach einem beliebigen der Ansprüche 1-3, wobei die Blastemperatur des Heißwinds 50 bis 70 °C, während des ersten Trockenvorgangs, beträgt und die Blastemperatur des Heißwinds (24), während des zweiten Trockenvorgangs, 70 bis 120°C beträgt.

5. Verfahren nach einem beliebigen der Ansprüche 1-4, wobei die Blasgeschwindigkeit des Heißwinds am Einlass des ersten Trockners 6 bis 8 m/s und am Auslass des ersten Trockners 4 bis 6 m/s, während des ersten Trockenvorgangs, beträgt und die Blasgeschwindigkeit des Heißwinds 1 bis 3 m/s, während des zweiten Trockenvorgangs, beträgt.

6. Verfahren nach einem beliebigen der Ansprüche 1-5, wobei die Trockenzeit des ersten Trockenvorgangs 10 bis 20 Minuten beträgt und die Trockenzeit des zweiten Trockenvorgangs 20 bis 40 Minuten beträgt.

7. Verfahren nach einem beliebigen der Ansprüche 1-6, wobei Feuchtigkeitsgehalt der Püreeprodukte (2A), die in den ersten Trockner geblasen werden, während des ersten Trockenvorgangs, 45 bis 60% beträgt und der Feuchtigkeitsgehalt der Püreeprodukte (2B), die in den zweiten Trockner geblasen werden, während des zweiten Trockenvorgangs, 25 bis 35 % beträgt.

8. Verfahren nach einem beliebigen der Ansprüche 1-7, das weiter eine Öffnungs- und Schließeinheit der Ausspeiseöffnung des zweiten Trockners zum Einstellen der Mengen der ausgespeisten Püreeprodukte als Mittel zum Einstellen des Feuchtigkeitsgehalts umfasst, bevor die getrockneten Püreeprodukte (2C) durch die Ausspeiseöffnung (36) ausgespeist werden.

9. Verfahren nach einem beliebigen der Ansprüche 1-8, wobei eine Feineinstellung des Feuchtigkeitsgehalts der getrockneten Püreeprodukte (2C) durch Steuerung der Temperatur des Heißwinds (24) beim zweiten Trockenvorgang ausgeführt wird.

10. Verfahren nach einem beliebigen der Ansprüche 1-9, wobei eine Feineinstellung des Feuchtigkeitsgehalts der getrockneten Püreeprodukte (2C) durch Steuerung des Neigungswinkels der unebenen Trommel (30) mittels eines Tauchkolbens (38) ausgeführt wird.

## Revendications

1. Un procédé à 2 étapes pour le séchage de produits en purée, comprenant les étapes du :
effectuer une première opération de séchage produits en purée (2A) dans une première unité de séchage (10) ; et
effectuer une seconde opération de séchage des produits en purée (2B) qui ont été séchés par la première opération de séchage une seconde unité de séchage (20),
dans lequel la première unité de séchage est une unité de séchage rotative à écoulement comprenant un tambour lisse et une ouverture d'entrée pour la fourniture de vent chaud par lequel les produits en purée (2A) sont flottés et mélangés dans le vent chaud,
dans lequel la seconde unité de séchage est une unité de séchage rotative à mélange comprenant un tambour non lisse et une ouverture d'entrée pour la fourniture de vent chaud, le tambour non lisse ayant une pluralité de parties en creux par lequel les produits en purée (2B) dans les parties en creux sont soulevés vers une partie supérieure du tambour non lisse et ensuite laissées tomber pour mélanger les produits en purée (2B) dans le vent chaud, dans lequel ladite première opération de séchage comprend les étapes de : souffler les produits en purée (2A) dans la première unité de séchage ; faire tourner le tambour lisse ; faire souffler du vent chaud dans le tambour lisse ; et évacuer les premiers produits en purée séchés (2B),
et dans lequel ladite opération de séchage comprend les étapes de : faire tourner le tambour non lisse (30) ; faire souffler le vent chaud dans le tambour non lisse (30) ; jeter les premiers produits en purée séchés (2B) dans une ouverture d'entrée (34) de la seconde unité de séchage au moyen d'un convoyeur d'entrée (12) ; faire tomber les produits en purée d'entrée (2B) dans un orifice d'admission pour qu'ils soient séchés une seconde fois dans le tambour non lisse en rotation (30) ; et évacuer les seconds produits en purée séchés (2C) par une ouverture d'évacuation (36),
ledit vent chaud utilisé pour le séchage étant circulé durant la seconde opération de séchage, et en même temps ledit vent chaud utilisé étant évacué,
dans lequel le vent chaud dans la seconde unité de séchage a une vitesse inférieure que le vent chaud dans la première unité de séchage.

2. Le procédé selon la revendication 1, dans lequel trois registres sont disposés respectivement à l'ouverture d'entrée (34), à une portion de la seconde unité de séchage et à l'ouverture d'évacuation (36) pour que le débit de vent chaud soit ajusté de façon égale aux dites trois positions quand le vent chaud (24) est soufflé durant la seconde opération de séchage.

3. Le procédé revendications 1 ou 2, dans lequel la rotation dudit tambour lisse est de 3 à 6 rpm durant la première opération de séchage, et la rotation dudit tambour non lisse (30) est de 6 à 18 durant la seconde opération de séchage.

4. Le procédé de l'une quelconque des revendications 1-3, dans lequel la température de soufflage du vent chaud est de 50 à 70°C durant la première opération de séchage, et la température du soufflage du vent chaud (24) est de 70 à 120°C durant la seconde opération de séchage.

5. Le procédé de l'une quelconque des revendications 1-4, dans lequel la vitesse de soufflage du vent chaud est de 6 à 8 m/sec à l'orifice d'admission de la première unité de séchage et de 4 à 6 m/sec à l'orifice de sortie de la première unité de séchage durant la première opération de séchage, et la vitesse de soufflage du vent chaud est de 1 à 3 m/sec durant la seconde opération de séchage.

6. Le procédé de l'une quelconque des revendications 1-5, dans lequel le temps de séchage de la première opération de séchage est de 10 à 20 minutes, et le temps de séchage de la seconde opération de séchage est de 20 à 40 minutes.

7. Le procédé de l'une quelconque des revendications 1-6, dans lequel la teneur en humidité produits en purée (2A) qui sont soufflés dans la première unité de séchage durant la première opération de séchage est de 45 à 60% et la teneur en humidité des produits en purée (2B) qui sont soufflés dans la seconde unité de séchage durant la seconde opération de séchage est de 25 à 35%.

8. Le procédé de l'une quelconque des revendications 1-7, comprenant en outre une unité d'ouverture et de fermeture de l'ouverture d'évacuation de la seconde unité de séchage pour ajuster les montants des produits évacués comme moyen pour ajuster la teneur de l'humidité avant d'évacuer les produits en purée sèches (2C) par l'ouverture d'évacuation (36).

9. Le procédé de l'une quelconque des revendications 1-8, dans lequel un ajustement précis de la teneur en humidité des produits en purée séchés (2C) est effectué en contrôlant la température du vent chaud (24) dans la seconde opération de séchage.

10. Le procédé de l'une quelconque des revendications 1-9, dans lequel un ajustement précis de la teneur en humidité des produits en purée séchés (2C) est effectué en contrôlant un angle d'inclinaison du tambour non lisse (30) au moyen d'un piston (38).
